# EUROPÄISCHE PATENTSCHRIFT

(11) **EP 2 465 466 B1**
(45) Veröffentlichungstag und Bekanntmachung des Hinweises auf die Patenterteilung: **12.10.2016**
(21) Anmeldenummer: 10196001.1
(22) Anmeldetag: 20.12.2010
(51) Int. Cl.: A61C 19/00, H05B 33/08, A61B 18/20

(54) **Handgeführtes Dentalgerät**
Handheld dental device
Appareil dentaire manuel

(43) Veröffentlichungstag der Anmeldung: 20.06.2012
(73) Patentinhaber: Ivoclar Vivadent AG, 9494 Schaan (LI)
(72) Erfinder: Benz, Oliver, 9487, Gamprin (LI); Tommasini, Dario, 7302, Mastrils (CH)
(74) Vertreter: Baronetzky, Klaus

(56) Entgegenhaltungen:
- EP-A1- 1 336 389
- EP-A2- 1 260 193
- WO-A2-2010/029519
- US-A- 6 140 776
- US-A1- 2006 245 187
- US-A1- 2010 254 149

## Beschreibung

Die Erfindung betrifft ein handgeführtes Dentalgerät, gemäß dem Anspruch 1.

Handgeführte Dentalgeräte mit einer Lichtquelle und einer Energiequelle wie einem Akkumulator sind seit langem in der Dentaltechnik bekannt. Ein Beispiel hierfür ist das aus der DE 42 11 230 A1 bekannte Dentalgerät, bei welchem die Lichtquelle über wiederaufladbare Akkumulatoren betrieben wird.

Kabellose Lichthärtgeräte sollen nach Möglichkeit nicht zu schwer sein.

Es ist das Bestreben der Zahnärzte und Zahntechniker, mit möglichst kurzen Polymerisationszyklen auszukommen. Hierzu stehen mittlerweile LED-Chips mit hoher Leistung zur Verfügung, die Lichtabgabezyklen von beispielsweise 20 oder 30 Sekunden ermöglichen.

Aus der DE 10 2004 033 699 A1 ist ein kabelloses Lichthärtgerät bekannt, bei dem ein Ultra-Cap-Kondensator als Energiespeicher eingesetzt wird. Dieser Ultra-Cap-Kondensator war in der Lage, die seinerzeit zur Verfügung stehenden LED-Chips mit ausreichend Energie zu versorgen, so dass 6 oder 7 Polymerisationszyklen möglich waren, bis der Ultra-Cap-Kon-densator erneut aufgeladen werden musste.

Aus der WO 2010/029519 A2 ist ein stiftförmiges, kabelloses Dentales-Lichthärtgerät mit einem Doppelschicht-Kondensator als Energiequelle offenbart.

Bei zu wenig Energie besteht die Problematik darin, dass die zur Verfügung stehende Ladungsmenge für einen Polymerisationszyklus nicht ausreicht, was dazu führen würde, dass nicht polymerisierte Monomere in den tieferen Schichten des Dentalrestaurationsteils verbleiben würden, die sehr kritisch gesehen werden, nachdem freie Radikale im Verdacht stehen, krebserregend zu wirken.

Dies wird insbesondere dadurch kritischer, da die Leistungen von LED's heutzutage bis zu 10 Watt erreichen, so dass auch bei einem einzigen Polymerisationszyklus die Gefahr besteht, dass die gespeicherte Ladungsmenge nicht ausreicht, wenn der dortige Ultra-CapKondensator nicht ausreichend geladen ist.

Demgegenüber liegt der Erfindung die Aufgabe zugrunde, ein handgeführtes Dentalgerät zu schaffen, das auch bei der Verwendung von Hochleistungs-Lichtquellen die Energieversorgung mit Reserve zur Verfügung stellt.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, einen Akkumulator, wie beispielsweise ein Lithium-Ionen-Akkumulator, mit mindestens einem zusätzlichen hochkapazitiven Doppelschicht-Kondensator zu kombinieren. Der von dem Akkumulator aufgeladene Doppelschicht-Kondensator hat eine sehr hohe Leistungsdichte von beispielsweise 5 W/g und wirkt als Haupt-Energielieferant für die Lichtquelle. Erfindungsgemäß wird die für die Polymerisation erforderliche Spannung durch den Akkumulator aufrechterhalten, beispielsweise, indem dann, wenn die Ladungsmenge, die auf dem Doppelschicht-Kondensator gespeichert ist, verbraucht wird, der Akkumulator als Spannungslieferant einspringt.

Der Akkumulator hat bevorzugt eine recht hohe Energiedichte von beispielsweise 100 mWh/g, aber eine Leistungsdichte, die erheblich unter der Leistungsdichte des Doppelschicht-Kondensators liegt und beispielsweise 1 W/g beträgt.

In einer vorteilhaften Ausgestaltung wird die Energiequelle haptsächlich zur Aufladung des Kondensators verwendet. Um die bevorzugte und günstige Potentialverteilung sicherzustellen, kann man letztlich bei Bedarf auch eine Spannungserhöhungsschaltung einsetzen.

Es versteht sich, dass es anstelle dessen auch möglich ist, bei Aufladung des Akkumulators zugleich auch den Kondensator aufzuladen, und die Ladespannung beider lässt sich - auch im Verhältnis zueinander - in weiten Bereichen an die Erfordernisse anpassen. Beispielsweise kann der Doppelschicht-Kondensator (EDLC) eine Spannungsfestigkeit von 2,75 Volt haben und auf 2,6 Volt aufgeladen werden, während die Lithium-Ionen-Akkumulatorzellen je auf 1,25 Volt, also bei der Verwendung von 2 in Serie geschalteten Zellen, auf 2,5 Volt aufaeladen werden.

Erfindungsgemäß besonders günstig ist es, wenn bei einer Mehrzahl von Kondensatoren eine Spannungs- und Stromvergleichmäßigung über ein sogenanntes balancing system erfolgt, das sicherstellt, dass alle Kondensatoren je die gleiche Ladung haben. Dies ist auch realisierbar, wenn beispielsweise 2 Kondensatoren parallel und 2 in Serie geschaltet sind, also eine Gesamtanordnung von 4 Kondensatoren vorliegt.

Die Doppelschicht-Kondensatore können eine beliebige geeignete Kapazität aufweisen. Typischerweise weist jeder Doppelschicht-Kondensator eine Kapazität von mindestens 1 F auf, wobei es aber auch möglich ist, eine Gesamtkapazität von beispielsweise 200 F aus 4 Doppelschicht-Kondensatore je 50 F zur Verfügung zu stellen.

Besonders günstig ist es, dass der erfindungsgemäß als Primär-Energiespeicher verwendete Doppelschicht-Kondensator auch besonders geeignet ist, eine hohe Stromstärke abzugeben. So lässt sich beispielsweise im gepulsten Betrieb eine Zykluszeit von weniger als 10 Sekunden bei entsprechend hoher Strombeaufschlagung der LED-Chips realisieren, und eine Bestrahlungsstärke von beispielsweise 10 W/cm² ist erfindungsgemäß erreichbar, ohne dass die Gefahr besteht, dass eine nicht-vollständige Polymerisation vorgenommen wird.

Erfindungsgemäß läßt sich in diesem Zusammenhang die Tatsache ausnutzen, dass die Leistungsdichten von Doppelschicht-Kondensatoren um mindestens eine Größenordnung, je nach Auslegung um mehr als zwei Größenordnungen höher als diejenigen von Lithium-lonen-Akkumulatoren sind.

Erfindungsgemäß besonders günstig ist es, dass durch die Kombination der hohen Leistungsdichte im Bereich der Doppelschicht-Kondensatoren und die hohe Energiedichte im Bereich der Lithium-Ionen-Akkumulatoren sowohl ein Hochstrom-Impulsbetrieb möglich ist, ohne den Lithium-Ionen-Akkumulator zu stark zu belasten, als auch ein im Verhältnis zur gespeicherten Energie geringes Gewicht des handgeführten Dentalgeräts.

Da eine insgesamt verkürzte Behandlungsdauer erforderlich ist, ist auch die Wärmeableitung vereinfacht: Während bei einer Einschaltdauer von beispielsweise 30 Sekunden die Aufheizung über einen vergleichsweise längeren Zeitraum erfolgt, so dass sich ein gleichmäßig hohes Temperaturniveau einstellt, entsteht bei einer vergleichsweise kurzen Einschaltdauer von 10 Sekunden ein Temperaturpeak, der auch günstig über einen Wärmepuffer ableitbar ist. So kann beispielsweise das Substrat der LED-Chips als Kupferkörper mit einer vergleichsweise hohen Wärmeaufnahmekapazität ausgebildet sein. Als sekundärer Wärmepuffer lassen sich gegebenenfalls auch die Doppelschicht-Kondensatoren einsetzen, die - zwar auf einem geringeren Temperaturniveau - aber grundsätzlich auch eine Aufheizung von beispielsweise 20° C auf 50° C vertragen, die als Wärmepuffer-Kapazität einsetzbar ist.

Es ist günstig, wenn die Doppelschicht-Kondensatoren dem im vorderen Ende des Dentalgeräts insbesondere in der Nähe der Lichtquelle angeordnet sind.

Erfindungsgemäß besonders günstig ist es, dass das Gerät mehrere, insbesondere vier, Doppelschicht-Kondensatoren aufweist.

Erfindungsgemäß besonders günstig ist es, dass das Gerät mehrere, insbesondere vier, Doppelschicht-Kondensatoren aufweist, die insbesondere der LED benachbart im vorderen Bereich des Dentalgeräts angeordnet sind.

Erfindungsgemäß besonders günstig ist es, dass das Gehäuse mehrere, insbesondere vier, Doppelschicht-Kondensatoren aufnimmt.

Erfindungsgemäß besonders günstig ist es, dass die Doppelschicht-Kondensatoren eine Kapazität von mehr als Farad insbesondere etwa 4 Farad aufweisen.

Erfindungsgemäß besonders günstig ist es, dass die Doppelschicht-Kondensatoren (26, 28) eine Energiedichte von mehr als 1 Wh/kg insbesondere etwa 3 Wh/kg, und eine Leistungsdichte von deutlich mehr als 1 W/g, insbesondere etwa 8 W/g aufweisen.

Erfindungsgemäß besonders günstig ist es, dass mindestens 2 der Doppelschicht-Kondensatoren parallel und/oder mindestens zwei der Doppelschicht-Kondensatoren seriell verbunden sind, die insbesondere über Vergleichmäßigungsschaltungen miteinander verbunden sind.

Erfindungsgemäß besonders günstig ist es, dass der Doppelschicht-Kodensator von einem Lithium-Ionen-Kondensator gebildet ist.

Erfindungsgemäß besonders günstig ist es, dass eine externe Ladestation und/oder eine externe Energieversorgungseinrichtung vorgesehen ist.

Erfindungsgemäß besonders günstig ist es, dass das Dentalgerät wenigstens einen Betriebsmodus aufweist, in dem, wenn die Ladung auf dem mindestens einen Doppelschicht-Kondensator (26, 28) nicht mehr ausreicht, automatisch eine Umschaltung zur dem Akkumulator (20) erfolgt.

Erfindungsgemäß besonders günstig ist es, dass die Lichtquelle wenigstens zwei LED-Chips aufweist, die Licht mit zueinander gleichen oder unterschiedlichen Wellenlängen emittieren, insbesondere 7 LED-Chips, von denen 6 LED-Chips nicht mit einer Wellenlänge von 460 nm bis 500 nm, insbesondere 470 nm und ein LED-Chip nicht mit einer Wellenlänge von 380 bis 430 nm, insbesondere 410 nm emittieren.

Erfindungsgemäß besonders günstig ist es, dass in wenigstens einem der Belichtungsmodi das Licht mit einer Bestrahlungsstärke von 500 mW/cm² bis 20.000 mW/cm², insbesondere 8.000 mW/cm² bis 12.000 mW/cm² für einen Zeitraum von höchstens zwei Sekunden, insbesondere etwa 0,5 Sekunden bis 1,5 Sekunden, emittiert.

Erfindungsgemäß besonders günstig ist es, dass die Betriebsmodi des Dentalgerätes über eine mit der Steuereinheit in Verbindung stehende, akkustische oder optische Signale ausgebende Bedieneinheit auswählbar sind.

Erfindungsgemäß besonders günstig ist es, dass das Dentalgerät einen thermisch mit der LED verbundenen Kühlkörper für die Abführung der von der Lichtquelle erzeugten Wärme aufweist, der insbesondere am vorderen Ende des Gehäuses der Lichtquelle benachbart angeordnet ist.

Erfindungsgemäß besonders günstig ist es, dass das Dentalgerät von einem Lichthärtgerät oder von einem Weichgewebelaser gebildet ist.

Erfindungsgemäß besonders günstig ist es, dass das Lichthärtgerät einen insbesondere abnehmbaren Lichtleiter aufweist, der sich vor der Lichtquelle erstreckt.

Weitere Vorteile, Einzelheiten und Merkmale ergeben sich aus der nachfolgenden Beschreibung eines Ausführungsbeispiels der Erfindung anhand der Zeichnung.

Es zeigen:
- Fig.1: eine schematische Ansicht eines erfindungsgemäßen handgeführten Dentalgeräts in einer Ausführungsform; und
- Fig. 2: eine schematische Ansicht einer Schaltung für das Dentalgerät in der Ausführung gemäß Fig. 1.

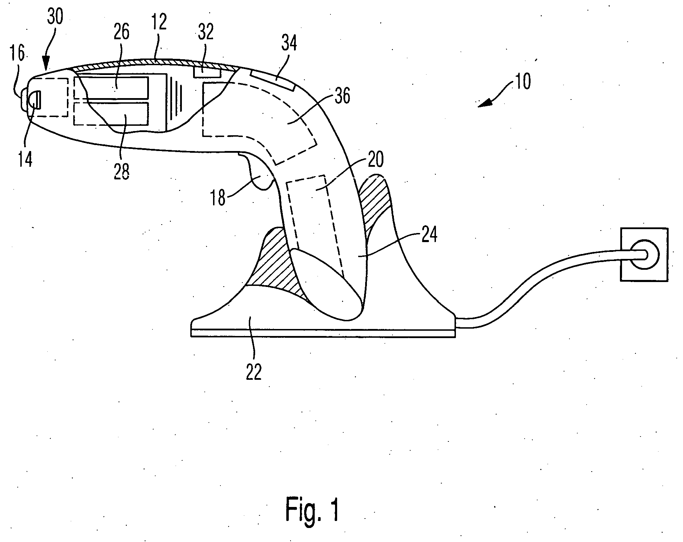

Das in Fig. 1 dargestellte Dentalgerät 10 weist ein Gehäuse 12 auf, das im wesentlichen in an sich bekannter Weise pistolenförmig ausgebildet ist. Das Gehäuse 12 nimmt an seinem vorderen Ende eine Lichtquelle 14 in Form einer LED auf deren emitiertes Licht gebündelt einem Lichtleiter zugeführt wird.

Das Gehäuse 12 nimmt ferner einen Schalter 18 auf, mit welchem das Dentalgerät 10 für die Lichtabgabe einschaltbar ist. Im Handgriff 24 des Gehäuses 12 ist in an sich bekannter Weise ein Akkumulator 20 vorgesehen, der bevorzugt aus einer Mehrzahl von einzelnen Akkumulatorzellen besteht. Für das Wiederaufladen des Akkumulators 20 ist eine Ladestation 22 vorgesehen, die eine Ausnehmung aufweist, in die der Handgriff 24 des Gehäuses 12 hineinpasst. Beim Einstellen des Handgriffs 24 in die Ausnehmung der Ladestation 22 werden zugleich elektrische Kontakte hergestellt, die die Spannungsversorgung des Dentalgeräts 10, das handgeführt ausgebildet ist, sicherstellen.

Erfindungsgemäß sind eine Mehrzahl von Doppelschicht-Kondensatoren 26, 28 in dem Gehäuse 12 angeordnet, wobei in Fig. 1 zwei Doppelschicht-Kondensatoren 26, 28 dargestellt sind. Die Kondensatoren 26, 28 sind ebenfalls im vorderen Bereich des Gehäuses 12 angeordnet, jedoch deutlich hinter der Lichtquelle 14. Die Lichtquelle 14 ist zu ihrer Kühlung auf einen Kühlkörper 30 montiert, der sich unmittelbar hinter der Lichtquelle 14 erstreckt. Bei Bedarf können die Kondensatoren 26, 28 in Wärmeleitverbindungen mit dem Kühlkörper 30 stehen, um so noch eine höhere Wärmekapazität zu ermöglichen, ohne dass die Kondensatoren 26, 28 von der Wärmeabgabe allzu stark beeinträchtigt würden.

In dem dargestellten Ausführungsbeispiel beträgt die Wärmekapazität der Doppelschicht-Kondensatoren 26, 28 mindestens das Doppelte, bevorzugt das vierfache der Wärmekapazität des Kühlkörpers 30.

In an sich bekannter Weise nimmt das Gehäuse 12 an seiner Oberseite, Steuerungselemente auf. Hierzu gehört eine Ausgabe beispielsweise in Form eines Lautsprechers 32 und eine Bedieneinheit 34. Diese kann die eine LCD-Ausgabeeinheit oder einen Touch Screen für die Einstellung und das Auswählen eines Polymerisationszykluses umfassen.

Zur Steuerung des Dentalgeräts 10 ist eine Steuereinrichtung 36 vorgesehen, die es ermöglicht, sämtliche Funktionen zu steuern und zu überwachen.

Auch wenn dies in Fig. 1 nicht dargestellt ist, versteht es sich, dass der Kühlkörper 30 in an sich bekannter Weise Kühlrippen aufweisen kann, und auch über ein ebenfalls nicht dargestelltes Gebläse in geeigneter Weise gekühlt werden kann.

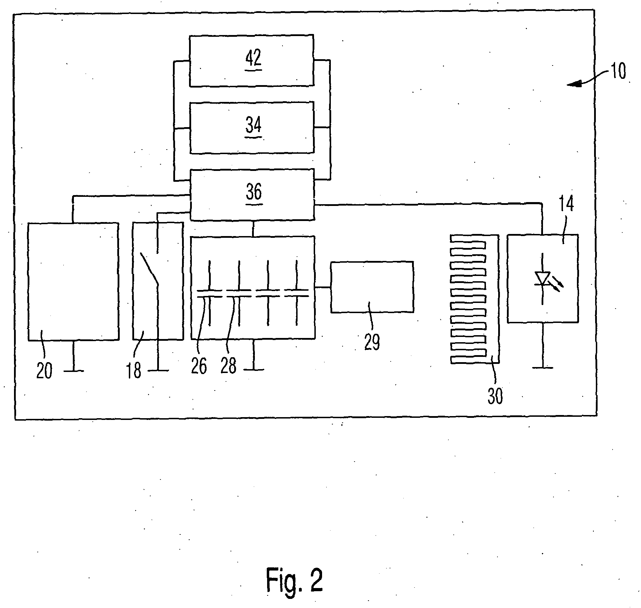

In Fig. 2 ist eine schematische Schaltungsanordnung für das Dentalgerät 10 dargestellt. Die Schaltungsanordnung zeigt die Lichtquelle 14, die als eine Mehrfachanordnung von LED-Chips ausgebildet ist und auf dem Kühlkörper 30 gelagert ist, beispielsweise auf einem gemeinsamen Kühlkörper 30 für mehrere LED-Chips.

Bevorzugt in Nähe hierzu ist die Mehrfachanordnung von Doppelschicht-Kondensatoren 26, 28 angeordnet, wobei hier, der Einfachheit halber, vier Doppelschicht-Kondensatoren dargestellt sind. Tatsächlich sind die Doppelschicht-Kondensatoren 26, 28 über eine Vergleichmäßigungsschaltung miteinander verbunden.

Die Darstellung gemäß Fig. 2 zeigt lediglich die Lichtabgabe, nicht hingegen die Aufladung der Doppelschicht-Kondensatoren 26, 28, die sowohl über die Akkumulatoren 20 als auch über die Ladestation 22 erfolgen kann.

Gemäß der Darstellung in Fig. 2 ist ein Blockschaltbild vorgesehen, das die wesentlichen Elemente des erfindungsgemäßen Lichthärtgeräts 10 zeigt. Die Energiequelle ist in Form eines Blockschaltbilds dargestellt und weist einen Akkumulator 20 und Doppelschicht-Kondensatoren 26,28 auf. Sie ist an eine Steuervorrichtung 36 angeschlossen, die als zentrale Einheit die Entladung des Akkumulators 20 einerseits und der Doppelschicht-Kondensatoren 26, 28 andererseits steuert, um die Lichtquelle 14, die ebenfalls an die Steuervorrichtung 36 angeschlossen ist, mit Energie zu versorgen. Hierzu weist die Steuereinrichtung 36 ein nicht dargestelltes Schaltglied auf, das die Umschaltung in der gewünschten Weise gewährleistet.

Die Auslösung des Polymerisationszyklusses erfolgt über einen Schalter 18, der ebenfalls mit der Steuereinrichtung 36 verbunden ist und einen programmierbaren Timer auslöst, der für eine vorgegebene Zeit Ladung zunächst aus den Doppelschicht-Kondensatoren 26, 28 der Lichtquelle 14 zuführt. Wenn die Ladung auf den Doppelschicht-Kondensatoren 26, 28 nicht mehr ausreicht, also wenn die Spannung an dieser Stelle zu gering geworden ist, erfolgt in erfindungsgemäß günstiger Ausgestaltung automatisch eine Umschaltung, so dass der Akkumulator 20 verzögerungsfrei den Polymerisationszyklus fortsetzt.

Die Doppelschicht-Kondensatoren 26, 28, von denen in der Ausführungsform gemäß Fig. 2 vier dargestellt sind, sind über eine Balancierschaltung 29 untereinander verbunden. Diese dient dazu, die gleichförmigkeit der Ladung auf allen vier Doppelschicht-Kondensatoren sicher zu stellen.

Die Steuereinrichtung 36 ist ferner mit einer Bedieneinheit 34 verbunden, die beispielsweise die Einstellung der zu programmierenden Polymerisationszeit oder beispielsweise die Anwahl des Kalibriermodus ermöglicht.

Ferner ist eine Ausgabeeinheit 42 vorgesehen, die den gewünschten Betriebsmodus und beliebige andere Parameter des Polymerisationszyklusses einerseits und des Dentalgeräts 10 andererseits darstellen kann.

## Patentansprüche

1. Handgeführtes Dentalgerät, mit einem Gehäuse (12) in dem eine Lichtquelle (14), insbesondere wenigstens eine LED, mit einer Energiequelle und einer Steuereinrichtung (36) in Verbindung steht, wobei die Energiequelle von mindestens einem Akkumulator (20), insbesondere einem Lithium-Ionen-Akkumulator (20), und wenigstens einem Energiespeicher in Form mindestens eines Doppelschicht-Kondensators (26,28) gebildet ist.

2. Dentalgerät nach Anspruch 1, **dadurch gekennzeichnet, dass** das Gerät mehrere, insbesondere vier, Doppelschicht-Kondensatoren (26, 28) aufweist.

3. Dentalgerät nach einem der vorhergehenden Ansprüche, **dadurch gekennzeichnet, dass** die Doppelschicht-Kondensatoren (26, 28) eine Kapazität von mehr als 1 Farad, insbesondere etwa 4 Farad aufweisen.

4. Dentalgerät nach einem der vorhergehenden Ansprüche, **dadurch gekennzeichnet, dass** mindestens 2 der Doppelschicht-Kondensatoren (26, 28) parallel und/oder mindestens zwei der Doppelschicht-Kondensatoren (26, 28) seriell verbunden sind, die insbesondere über Vergleichmäßigungsschaltungen miteinander verbunden sind.

5. Dentalgerät nach einem der vorhergehenden Ansprüche, **dadurch gekennzeichnet, dass** der Doppelschicht-Kodensator von einem Lithium-Ionen-Kondensator gebildet ist.

6. Dentalgerät nach einem der vorhergehenden Ansprüche, **dadurch gekennzeichnet, dass** eine externe Ladestation (22) und/oder eine externe Energieversorgungseinrichtung vorgesehen ist.

7. r Dentalgerät nach einem der vorhergehenden Ansprüche, **dadurch gekennzeichnet, dass** das Dentalgerät (10) wenigstens einen Betriebsmodus aufweist, in dem, wenn die Ladung auf dem mindestens einen Doppelschicht-Kondensator (26, 28) nicht mehr ausreicht, automatisch eine Umschaltung zur dem Akkumulator (20) erfolgt.

8. Dentalgerät nach einem der vorhergehenden Ansprüche, **dadurch gekennzeichnet, dass** die Lichtquelle (14) wenigstens zwei LED-Chips aufweist, die Licht mit zueinander gleichen oder unterschiedlichen Wellenlängen emittieren, insbesondere 7 LED-Chips, von denen 6 LED-Chips nicht mit einer Wellenlänge von 460 nm bis 500 nm, insbesondere 470 nm und ein LED-Chip nicht mit einer Wellenlänge von 380 bis 430 nm, insbesondere 410 nm emittieren.

9. Dentalgerät nach einem der vorhergehenden Ansprüche, **dadurch gekennzeichnet, dass** in wenigstens einem der Belichtungsmodi das Licht mit einer Bestrahlungsstärke von 500 mW/cm² bis 20.000 mW/cm², insbesondere 8.000 mW/cm² bis 12.000 mW/cm² für einen Zeitraum von höchstens zwei Sekunden, insbesondere etwa 0,5 Sekunden bis 1,5 Sekunden, emittiert.

10. Dentalgerät nach einem der vorhergehenden Ansprüche, **dadurch gekennzeichnet, dass** die Betriebsmodi des Dentalgerätes (10) über eine mit der Steuereinheit (36) in Verbindung stehende, akkustische oder optische Signale ausgebende Bedieneinheit (34) auswählbar sind.

11. Dentalgerät nach einem der vorhergehenden Ansprüche, **dadurch gekennzeichnet, dass** das Dentalgerät (10) einen thermisch mit der LED verbundenen Kühlkörper (30) für die Abführung der von der Lichtquelle (14) erzeugten Wärme aufweist, der insbesondere am vorderen Ende des Gehäuses (12) der Lichtquelle (14) benachbart angeordnet ist.

12. Dentalgerät nach einem der vorhergehenden Ansprüche, **dadurch gekennzeichnet, dass** das Dentalgerät (10) von einem Lichthärtgerät oder von einem Weichgewebelaser gebildet ist.

13. Dentalgerät nach einem der vorhergehenden Ansprüche, **dadurch gekennzeichnet, dass** das Lichthärtgerät einen insbesondere abnehmbaren Lichtleiter aufweist, der sich vor der Lichtquelle (14) erstreckt.

## Claims

1. A hand-held dental device, comprising a housing (12) in which a light source (14), in particular at least one LED, is connected to an energy source and a control device (36), wherein the energy source is composed of at least one accumulator (20), in particular a lithium ion accumulator (20), and at least one energy storage in the form of at least one double layer capacitor (26, 28).

2. The dental device as claimed in claim 1, **characterized in that** the device comprises several, in particular four, double layer capacitors (26, 28).

3. The dental device as claimed in one of the preceding claims, **characterized in that** the double layer capacitors (26,28) have a capacity of more than 1 Farad, in particular approximately 4 Farad.

4. The dental device as claimed in one of the preceding claims, **characterized in that** at least 2 of the double layer capacitors (26, 28) are connected in parallel and/or at least 2 of the double layer capacitors (26, 28) are connected in series, which in particular are connected to each other via balancing circuits.

5. The dental device as claimed in one of the preceding claims, **characterized in that** the double layer capacitor is formed by a lithium ion capacitor.

6. The dental device as claimed in one of the preceding claims, **characterized in that** an external charging unit (22) and/or an external energy supply unit is provided

7. The dental device as claimed in one of the preceding claims, **characterized in that** the dental device (10) comprises at least one operating mode in which, when the charge on the at least one double layer capacitor (26, 28) is not sufficient any longer, switching to the accumulator (20) takes place automatically.

8. The dental device as claimed in one of the preceding claims, **characterized in that** the light source (14) comprises at least two LED chips which emit light at wavelengths which are equal to or different from one another, in particular 7 LED chips, of which 6 LED chips do not emit at a wavelength of 460 nm to 500 nm, in particular 470 nm, and one LED chip does not emit at a wavelength of 380 to 430 nm, in particular 410 nm.

9. The dental device as claimed in one of the preceding claims, **characterized in that** in at least one of the exposure modes light is emitted at an irradiance of 500 mW/cm² to 20,000 mW/cm², in particular 8,000 mW/cm² to 12,000 mW/cm² for a period of two seconds at most, in particular approximately 0.5 seconds to 1.5 seconds.

10. The dental device as claimed in one of the preceding claims, **characterized in that** the operating modes of the dental device (10) are selectable via an operating unit (34) which is connected to the control device (36) and which outputs acoustical or optical signals.

11. The dental device as claimed in one of the preceding claims, **characterized in that** the dental device (10) comprises a heat sink (30) which is thermally connected to the LED for dissipating the heat which is produced by the light source (14), which heat sink is located in particular at the front end of the housing (12) adjacent to the light source (14).

12. The dental device as claimed in one of the preceding claims, **characterized in that** the dental device (10) is formed by a light curing apparatus or by a soft tissue laser.

13. The dental device as claimed in one of the preceding claims, **characterized in that** the light curing apparatus comprises a particularly detachable light guide which extends in front of the light source (14).

## Revendications

1. Appareil de technique dentaire commandé manuellement, avec un boîtier (12) avec lequel au moins une source de lumière (14), en particulier au moins une LED avec une source d'alimentation et un dispositif de commande (36) est en contact, où la source d'énergie est formée par au moins un accumulateur (20), en particulier une batterie lithium-ion (20) et au moins un stockage de l'énergie sous forme d'au moins un condensateur à double-couche (26,28).

2. Appareil de technique dentaire selon la revendication 1, **caractérisé en ce que** l'appareil comprend plusieurs, en particulier quatre, condensateurs à double-couche (26, 28)

3. Appareil de technique dentaire selon l'une des revendications précédentes, **caractérisé en ce que** les condensateurs à double-couche (26, 28) ont une capacité supérieure à 1 Farad, en particulier environ 4 Farad.

4. Appareil de technique dentaire selon l'une dés revendications précédentes, **caractérisé en ce qu'**au moins 2 des condensateurs à doublé-couche (26, 28) sont connectés en parallèle et/ou au moins deux des condensateurs à double-couche (26, 28) sont connectés en série, qui sont reliés entre elles en particulier par des circuits de régularisation.

5. Appareil de technique dentaire selon l'une des revendications précédentes, **caractérisé en ce que** le condensateur à double-couche est formé par un condensateur lithium-ion.

6. Appareil de technique dentaire selon l'une des revendications précédentes, **caractérisé en ce que** une station de charge externe (22) et/ou un dispositif d'alimentation en énergie externe est fourni.

7. Appareil de technique dentaire selon l'une des revendications précédentes, **caractérisé en ce que** l'appareil dentaire (10) a au moins un mode de fonctionnement, par le biais duquel, si la charge sur l'au moins un condensateur à double couche (26, 28) n'est plus suffisante, une commutation automatique vers l'accumulateur (20) est effectuée.

8. Appareil de technique dentaire selon l'une des revendications précédentes, **caractérisé en ce que** la source de lumière (14) possède au moins deux puces LED qui émettent de la lumière avec des longueurs d'onde identiques ou différentes les unes des autres, en particulier 7 puces LED, dont 6 puces LED n'émettent pas avec une longueur d'onde de 460 nm à 500 nm, en particulier de 470 nm et une puce LED n'émet pas avec une longueur d'onde de 380 à 430 nm, en particulier de 410 nm.

9. Appareil de technique dentaire selon l'une des revendications précédentes, **caractérisé en ce que**, dans au moins un des modes d'exposition la lumière s'émet avec un éclairement énergétique de 500 mW/cm² à 20 000 mW/cm², en particulier de 8 000 mW/cm² à12 000 mW/cm² pour une période maximale de deux secondes, en particulier environ 0,5 secondes à 1,5 secondes.

10. Appareil de technique dentaire selon l'une des revendications précédentes, **caractérisé en ce que** les modes de fonctionnement de l'appareil de technique dentaire (10) sont sélectionnables par une unité de commande émettant des signaux acoustiques ou optiques (34) associée avec l'unité de contrôle (36).

11. Appareil de technique dentaire selon l'une des revendications précédentes, **caractérisé en ce que** l'appareil de technique dentaire (10) présente un dissipateur thermique (30) relié à la LED pour la dissipation de la chaleur produite par la source lumineuse (14), qui est arrangé en particulier à l'extrémité avant du boîtier (12) avoisinant la source de lumière (14).

12. Appareil de technique dentaire selon l'une des revendications précédente, **caractérisé en ce que** l'appareil de technique dentaire (10) est formé d'un appareil de photopolymérisation ou d'un laser de tissus mous.

13. Appareil de technique dentaire selon l'une des revendications précédentes, **caractérisé en ce que** l'appareil de photopolymérisation présente en particulier une fibre optique détachable, qui s'étend à partir de la source lumineuse (14).
